# EUROPÄISCHE PATENTANMELDUNG

(11) **EP 3 510 859 A1**
(43) Veröffentlichungstag der Anmeldung: **17.07.2019**
(21) Anmeldenummer: 19151198.9
(22) Anmeldetag: 10.01.2019
(51) Int. Cl.: A01K 5/00, A01K 5/02, A01F 25/20

(54) **STEUERUNGSVERFAHREN FÜR EINE FÜTTERUNGSMASCHINE**

(30) Priorität: 11.01.2018 DE 102018100534
(71) Anmelder: B. Strautmann & Söhne GmbH u. Co. KG, 49196 Bad Laer (DE)
(72) Erfinder: Strautmann, Wolfgang, 49196 Bad Laer (DE); Wegmann, geb. Malewski, Benjamin, 49497 Mettingen (DE); Trabhardt, Andreas, 49080 Osnabrück (DE)
(74) Vertreter: Träger, Denis

(57) **Zusammenfassung**

Die Erfindung betrifft ein Verfahren zur Steuerung einer Fütterungsmaschine (10), insbesondere eines selbstfahrenden Futtermischwagen. Sollen solche Fütterungsmaschinen in einem teil- oder vollautonomen Modus betrieben werden, so ist zum einen ein relativ hoher Programmieraufwand erforderlich und zum anderen die Anpassung an die individuellen Gegebenheiten des jeweiligen Einsatzortes.

Um die Komplexität zu reduzieren wird vorgeschlagen, dass zum Betreiben der Fütterungsmaschine (10) wenigstens zwei Betriebsmodi vorgesehen sind und in einem ersten Betriebsmodus
- eine Aufnahmeeinrichtung (22) zur Aufzeichnung von manuell und/oder automatisch an die Steuerungseinrichtung (20) gegebenen Steuersignalen zum Betrieb der Antriebseinrichtungen (15) aktiviert wird,
- nach Aktivierung der Aufnahmeeinrichtung (22) die aktuellen Orts- und/oder Betriebsparameter der Fütterungsmaschine (10) als Startpunkt (S) definiert und in der Speichereinrichtung (21) abgelegt werden,
- nach Definition des Startpunkts (S) ein Arbeits- und/oder Fahrprozess manuell von einer Bedienperson durchgeführt wird und die manuell und/oder automatisch an die Steuerungseinrichtung (20) gegebene Steuersignale aufgezeichnet und in der Speichereinrichtung (21) abgespeichert werden,
- die Aufnahmeeinrichtung (22) deaktiviert wird
und in einem zweiten Betriebsmodus nach dessen Aktivierung der in der Speichereinrichtung (20) abgelegte Arbeits- und/oder Fahrprozess aktivierbar und von der Fütterungsmaschine (10) automatisch durchführbar ist.

## Beschreibung

### Die Erfindung betrifft ein Verfahren zur Steuerung einer Fütterungsmaschine, insbesondere eines selbstfahrenden Futtermischwagens, nach dem Oberbegriff des Anspruchs 1

In der Innenwirtschaft moderner Rindviehbetriebe sind vollautomatisierte Prozesse bereits Realität. So ist der Melkroboter ein etablierter Bestandteil, der den zeitaufwendigsten Prozess neben der Fütterung voll automatisiert. Auch im Bereich der Fütterung werden bereits verschiedene Ansätze verfolgt, bei denen die Maschinensteuerung teilweise (Assistenzsysteme) oder sogar vollständig (autonome Systeme) von der Futterentnahme aus einem Flachsilo bis zur Futtervorlage bedienerunabhängig arbeitet.

So ist aus EP 3 023 004 B1 ein selbstfahrender Futtermischwagen bekannt, der einen Antriebsmotor, ein autonom verfahr- und steuerbares Fahrgestell sowie Arbeitsorgane in Gestalt von einer Entnahmevorrichtung für Futtermittel, einer Mischeinrichtung für die eingefüllten Futtermittel sowie eine Ausbringvorrichtung für das gemischte Futter umfasst. Die Navigation des Futtermischwagens erfolgt im autonomen Betrieb unter Ausnutzung von Positionsdaten, die zum Beispiel mittels eines globalen Navigationssatellitensystems (z.B. GPS) ermittelt werden. Die Positionsdaten werden in einer Steuerungseinheit, bei welcher es sich um einen in den Futtermischwagen integrierten Rechner handelt, zur Verfügung gestellt. Der Rechner gleicht die ermittelten Positionsdaten mit vordefinierten Zielpunkten ab, ermittelt auf dieser Basis eine Fahrroute und überträgt die erforderlichen Steuerbefehle an die Lenk- und Antriebseinrichtungen. Zur Durchführung und Überwachung von Arbeits- und Fahrvorgängen sind diverse Sensoren vorgesehen, die ebenfalls Daten an die Steuerungseinheit übermitteln und als Grundlage für nachfolgende Steuerbefehle dienen. Die autonome Steuerung dieser Maschine ist jedoch sehr komplex und erfordert einen relativ hohen Programmieraufwand Zudem ist der Einsatz eines solchen Futtermischwagens auf einem landwirtschaftlichen Betrieb auch von dort vorhandenen, individuellen Gegebenheiten abhängig. So kann es sein, dass Umbaumaßnahmen an der vorhandenen Infrastruktur erforderlich werden oder nur Teilprozesse durchgeführt werden können. Es werden deshalb zusätzliche Systeme benötigt, die die autonomen oder teilautomatisierten Prozesse ergänzen und beim Ausfall einen manuellen Betrieb gewährleisten. Diese zusätzlichen Systeme und Sensoren liefern wiederum Daten an die Steuerungsanlage, die dort verarbeitet und gegebenenfalls in Form revidierter, neuer Steuerbefehle an die Lenk- und Antriebseinrichtungen übertragen werden. Hierdurch entsteht ein sehr komplexes System wechselseitiger Abhängigkeiten, das einen sicheren Arbeitseinsatz erschwert. Dies gilt insbesondere auch dann, wenn an der Steuerung bzw. an dem Futtermischwagen individuelle Maßnahmen vorgenommen werden um den Einsatz auf einem bestimmten landwirtschaftlichen Betrieb zu ermöglichen.

Die Steuerung der Maschine basiert zum einen auf der Erfassung von Umgebungsdaten mittels geeigneter Sensoren und zum anderen auf der Hinterlegung einer statischen, dreidimensionalen Karte des Einsatzbereiches des Futtermischwagens (statische 3D-Karte). Da der Futtermischwagen gemäß EP 3 023 004 B1 in der Lage ist, sich autonom im Raum zu orientieren, besteht keine Notwendigkeit einen solchen Futtermischwagen mit einem anderen als dem vorgeschlagenen Navigationssystem auszurüsten.

Weiterhin grundsätzlich bekannt sind Schweißroboter, die vordefinierte Arbeitsprozesse automatisiert mittels sogenannter Teaching - playback Verfahren durchführen. So ist aus DE 3208433 A1 eine Steuervorrichtung für einen Industrieroboter bekannt, dessen Programmierung über einen Programmierkasten erfolgt. Im Teaching-Modus wird der Programmierkasten von einem Bediener über die Steuerkonsole zu mehreren Punkten einer Schweißlinie an einem zu schweißenden Werkstück geführt. Die Orts- oder Positionsdaten dieser Punkte werden in einem in der Steuerkonsole vorgesehen Speicher abgelegt. Im Playback-Modus sind die im Speicher abgelegten Positionsdaten automatisch und beliebig oft anfahrbar. Diese Teaching-Verfahren sind für stationäre Roboter vorgesehen.

Aus DE 695 25 931 T2 ist ein Futterwagen zum Verfüttern von Silage, Futter und/oder Kraftfutter bekannt, der auf einem automatischen Navigationssystem mit einer Detektionsvorrichtung zum Detektieren von passiven Baken basiert. Die passiven Balken dienen als Umgebungs-Erkennungszeichen. Die Position der Baken wird in einer vom Landwirt begleiteten Fahrt aufgezeichnet und in einem Computer aufgezeichnet. Das in DE 695 25 931 T2 offenbarte System basiert auf der Kombination des erfindungsgemäß vorgeschlagenen aktiven Detektionsvorrichtung mit den Baken als passive Erkennungszeichen, die vom Landwirt ausgewählt werden müssen. Dieses System dient ausschließlich der Navigation des Futterwagens und bezieht sich nicht auf weitere für den Betrieb des Futterwagens erforderliche Teilaufgaben, wie Futterentnahme, Futtermischen und Futtervorlage, die in ihrer Ausführung frei kombinierbar sind. Für das in DE 695 25 931 T2 beschriebene Navigationssystem bilden die dort beschriebenen Baken ein wesentliches Merkmal der Erfindung ohne das das Navigationssystem insgesamt nicht funktionsfähig ist.

Aufgabe der Erfindung ist es, die beschriebenen Nachteile zu beseitigen und ein Steuerungsverfahren vorzuschlagen, mit Hilfe dessen eine Fütterungsmaschine einfach an neue Aufgabenstellungen oder individuelle Gegebenheiten am Einsatzort anpassbar ist. Weiterhin ist es Aufgabe der Erfindung, eine zur Durchführung eines solchen Steuerungsverfahrens geeignete Fütterungsmaschine vorzuschlagen.

Diese Aufgabe wird gelöst durch ein Steuerungsverfahren mit den Merkmalen des Anspruchs 1 und eine Fütterungsmaschine mit den Merkmalen des Anspruchs 15.

Die für das erfindungsgemäße Verfahren vorgesehene Fütterungsmaschine umfasst:
- wenigstens eine Antriebseinrichtung zum Antrieb von Aktoren für den Fahrantrieb und/oder die Lenkung und/oder eine Entnahmevorrichtung und/oder eine Mischvorrichtung und/oder eine Ausbringvorrichtung,
- wenigstens eine Steuerungseinrichtung zum Betrieb der Fütterungsmaschine und/oder der Antriebseinrichtungen,
- Sensoren zur Erfassung der Ortsposition der Fütterungsmaschine und/oder der Umgebung (Odometriesensoren),
- Sensoren zur Erfassung von Betriebsparameter der Fütterungsmaschine,
- ein elektronisches Bedienterminal und
- wenigstens eine Speichereinrichtung für Ortskoordinaten und Arbeitsabläufe.

Unter Odometriesensoren werden Sensoren verstanden, mittels derer die Position und Orientierung eines mobilen Systems bestimmt werden kann. Odometrische Messverfahren ermöglichen eine relative Positionsbestimmung, da sie nur mit Wegdifferenzen arbeiten. Für eine absolute Positionsangabe muss eine Position bekannt sein, auf die die Positionsdifferenzen bezogen werden können. Als Eingangsgrößen dienen in der Regel Messgrößen aus dem Fahrwerk (Raddrehung, Richtung), des Gierratensensors (ESP/ABS) und der Lenkung (Radlenkwinkel, Lenkradwinkel).

Vorzugsweise ist die Odometrie Ortung permanent aktiviert. Dadurch wird jede Bewegung der Maschine im Indoor-Bereich und auch im Outdoor-Bereich registriert. Hierdurch erfolgt eine relative Positionsbestimmung, die jedoch durch Maschinendesign und äußere Einflüsse einen relativen Fehler mit sich bringt. Das Ausgleichen des relativen Fehlers sowie einer absoluten Positionsbestimmung erfolgt vorzugsweises mittels eines zusätzlichen Systems, beispielsweise durch ein zusätzliches GNSS-System oder vergleichbaren, absoluten Positionsbestimmungssystemen. Unter dem Sammelbegriff GNSS-System werden bestehende und künftige Satelliten-Ortungs-Systeme, beispielsweise die bereits bestehenden Systeme Navstar GPS (Global Positioning System), GLONAA, Galileo oder Beidou. Durch eine Echtzeitkinematik (engl.: Real Time Kinematic, RTK) lässt sich die Genauigkeit der absoluten Positionsbestimmung weiter steigern. Die präzisen Positionen werden relativ zu Referenzstationen mit feststehenden Koordinaten bestimmt.

Somit kann für die absolute Ortung Outdoor z.B. ein GNSS genutzt werden, während im Indoor-Bereich z.B. mit Landmarken gearbeitet werden kann. Alternativ hierzu kann auch eine Komplettlösung für Indoor und Outdoor vorgesehen sein, die besser geeignet ist als GNSS oder Landmarken.

Bei der Fahrzeugnavigation werden die odometrischen Messverfahren ergänzend zur Satelliten-Ortung eingesetzt, um Bereiche ohne Empfang zu überbrücken und die Ergebnisse der Satelliten-Ortung zu verfeinern.

Auf die Daten der Odometriesensoren und der Satelliten-Ortung wird je nach Bedarf einzeln oder gemeinsam, das heißt: unter paralleler Nutzung von mit unterschiedlichen Systemen ermittelten Daten, zugegriffen. Konkret kann beispielsweise vorgesehen sein, dass die Navigation für eine erste von der Fütterungsmaschine zurückzulegende Wegstrecke im Außenbereich eines landwirtschaftlichen Betriebes auf Basis der Satelliten-Ortung und eine sich anschließende zweite Wegstrecke in einen Stall hinein auf Basis der Odometriesensoren erfolgt. Es kann eine konkrete Position festgelegt sein, an der die erste Wegstrecke endet und die zweite Wegstrecke beginnt wobei dementsprechend die Fahrzeugnavigation bei Erreichen dieser Position von Satelliten-Ortung auf Odometrieortung umgestellt wird. Alternativ dazu kann auch vorgesehen sein, dass an Stelle einer konkreten Wechsel-Position ein Übergangsbereich festgelegt ist, in dem beide Systeme parallel arbeiten. Bei diesem Bereich kann es sich beispielsweise um den Bereich einer Stalleinfahrt handeln, in dem die Satelliten-Ortung zunächst noch möglich ist, mit fortschreitender Einfahrt in den Stall jedoch immer schwächer wird. Im Übergangsbereich arbeiten dann beide Systeme parallel bevor die Navigation dann im Stall selbst komplett auf Odometrie-Ortung umgestellt wird.

Grundsätzlich kann der erfindungsgemäße Futtermischwagen im manuellen Modus, im teilautonomen Modus (Assistenzsystem) und im vollautonomen Modus betrieben werden. Erfindungsgemäß sind wenigstens zwei Betriebsmodi zum Betrieb der Fütterungsmaschine vorgesehen. Unter einem Betriebsmodus wird in diesem Zusammenhang eine Grundeinstellung für die Ausführung von Steuerbefehlen verstanden. Die zum Steuern der Fütterungsmaschine erforderlichen Befehle können grundsätzlich zum Einen auf Basis manueller Eingaben, beispielsweise einer manuellen Fahrbewegung mittels einer Richtungsvorwahl und/oder eines Fahrpedals, an die Steuerungseinrichtung der Fütterungsmaschine übermittelt und von dort an die entsprechenden Aktoren übertragen werden. Zum anderen können die Steuerbefehle mittels eines Steuerungsprogramms übermittelt werden. Im Folgenden wird der erste Betriebsmodus auch als "manueller Modus" und der zweite Betriebsmodus auch als "autonomer Modus" bezeichnet.

Erfindungsgemäß ist ein Verfahren vorgesehen, bei welchem im ersten, also manuellen, Betriebsmodus:
- eine Aufnahmeeinrichtung zur Aufzeichnung von manuell und/oder automatisch an die Steuerungseinrichtung gegebenen Steuersignalen zum Betrieb der Antriebseinrichtungen aktiviert wird,
- nach Aktivierung der Aufnahmeeinrichtung die aktuellen Orts- und/oder Betriebsparameter der Fütterungsmaschine als Startpunkt definiert und in der Speichereinrichtung abgelegt werden,
- nach Definition des Startpunkts ein Arbeits- und/oder Fahrprozess manuell von einer Bedienperson durchgeführt wird und die manuell und/oder automatisch an die Steuerungseinrichtung gegebene Steuersignale aufgezeichnet und in der Speichereinrichtung abgespeichert werden,
- die Aufnahmeeinrichtung deaktiviert wird.

In einem zweiten Betriebsmodus ist nach dessen Aktivierung der in der Speichereinrichtung abgelegte Arbeits- und/oder Fahrprozess aktivierbar und von der Fütterungsmaschine automatisch durchführbar.

Vorzugsweise werden die manuell und/oder automatisch an die Steuerungseinrichtung gegebenen Steuersignale bis zum Erreichen eines definierten Endpunktes aufgezeichnet.

Erfindungsgemäß ist somit vorgesehen, dass im manuellen Betriebsmodus ein bestimmter Arbeits- und/oder Fahrprozess in die Steuereinheit der Fütterungsmaschine eingelernt wird und der so eingelernte Arbeits- und oder Fahrprozess im Autonomiemodus automatisch reproduzierbar ist.

Besonders vorteilhaft ist hierbei, dass die Programmierung von einem Bediener sehr einfach durchführbar ist, da im Prinzip EDV-technische Programmierkenntnisse nicht erforderlich sind. Der Bediener lernt (teacht) das Fahrzeug sozusagen an, indem er die zu erledigende Aufgabe einmal manuell selbst erledigt und den Vorgang durch Aktivieren und Deaktivieren der Aufnahmeeinrichtung dokumentiert und abspeichert.

Es kann vorgesehen sein, dass im ersten Betriebsmodus prozessrelevante Informationen statisch eingegeben oder als Schnittstelle zu parallelen oder übergeordneten Systemen und/oder Programmen in Form von Einzelmodulen in der Speichereinrichtung abgelegt werden. Hiermit wird dem Bediener ermöglicht, eine Verknüpfung von Einzelmodulen zu einem Gesamtmodul zu erstellen, wobei auch weitere Module mit Informationen, die beispielsweise ein bestimmtes Fütterungsmanagement und/oder ein Rezept und/oder die Zuordnung einer Futter-Komponente unter Angabe des erforderlichen Gewichtes und/oder der erforderlichen Futtermenge zur Fütterung einer Tiergruppe einbeziehen, ergänzend hinzugefügt werden können.

Zum Beispiel sind Rezepte für eine TMR-Fütterung (Totale Mischration) in den meisten Fällen dynamisch und werden anhand verschiedener Parameter geändert. Daher sollten diese Vorgaben auch durch eine Verknüpfung zu einem Fütterungsmanagement dynamisch geändert werden können. Der Anwender ändert somit einmalig die Menge im Fütterungsmanagement. Hierdurch erübrigt sich eine Änderung in der Benutzerschnittstelle der Fütterungsmaschine.

Ein konkretes Beispiel ist die Anwendung des beschriebenen Verfahrens zur Fütterung einer hinsichtlich ihrer Anzahl variierenden Anzahl von zu fütternden Kühen. So kann in einem Milchviehbetrieb die Zahl derjenigen Kühe, die zeitweilig nicht gemolken werden ("Trockensteher") täglich variieren. Ist im Fütterungsmanagement hinterlegt, mit welcher Futterrezeptur und Futtermenge ein einzelnes Tier einer solchen Tiergruppe zu füttern ist, reicht es aus, wenn der Steuereinheit die Anzahl dieser Tiere übermittelt wird. Das Steuerungsprogramm wird hierdurch in die Lage versetzt, die absoluten Futtermengen zur Fütterung dieser Tiergruppe selbsttätig zu ermitteln beziehungsweise an die zu fütternde Tierzahl anzupassen.

Ergänzend hierzu kann weiterhin vorgesehen sein, im ersten Betriebsmodus nicht nur einen Arbeits- und/oder Fahrprozess aufzuzeichnen, sondern wenigstens zwei unterschiedliche Arbeits- und/oder Fahrprozesse aufzuzeichnen und in Form von Einzelmodulen in der Speichereinrichtung abzulegen. Hierdurch erhöhen sich das Anwendungsspektrum und die Flexibilität des Verfahrens. So kann beispielsweise ein erster Arbeitsprozess unter dem Titel "Fahrt von einem definierten Startpunkt zu einem definierten Zielpunkt" zusammengefasst werden und ein weiterer Arbeitsprozess unter dem Titel "Entnahme von Futtermitteln aus einem Silo". Auf diese Weise können beliebig viele Einzelmodule erstellt und in der Speichereinrichtung abgelegt werden. Ein Vorteil dieser Systematik ist, dass ständig wiederkehrende Prozesse in Form von Einzelmodulen für die Zusammenführung zu einem Gesamtmodul nicht mehrfach eingelernt werden müssen.

Besonders vorteilhaft ist es, wenn in der Speichereinrichtung vordefinierte Module für Arbeits- und/oder Fahrprozesse abgelegt und im ersten Betriebsmodus manuell abrufbar sind, so dass der abgerufene Arbeits- und/oder Fahrprozess als Fahrerassistenzsystem ausführbar ist. Der Bediener wird somit in die Lage versetzt, die Fütterungsmaschine wahlweise auf herkömmliche Art manuell zu bedienen oder nach eigenem Ermessen bestimmte Module zu aktivieren und automatisiert ablaufen zu lassen. Hierdurch ergibt sich die Möglichkeit, beispielsweise komplizierte oder einmalige Vorgänge, wie die Entnahme von Futtermitteln aus einem nicht vordefinierten Lagerbereich, manuell durchzuführen und andererseits bei Bedarf Entlastung für die Bedienperson zu schaffen, indem ein bestimmter, sich häufig wiederholender Vorgang voll- oder teilautonom nach Art eines Fahrer-Assistenzsystems abgearbeitet wird.

Zwei oder mehr Einzelmodule können miteinander zu einem Gesamtmodul verknüpfbar sein, wobei die Einzelmodule ein Gesamtmodul bilden, welches im zweiten Betriebsmodus die miteinander verknüpften Einzelmodule je nach Verknüpfungsart parallel zueinander und/oder sequentiell reproduziert. Umfasst das Gesamtmodul lediglich zwei Einzelmodule, beispielsweise ein erstes Einzelmodul welches die Zurücklegung einer Fahrtstrecke von A nach B definiert und ein zweites Einzelmodule, welches die Aktivierung der in der Fütterungsmaschine enthaltenen Mischvorrichtung für fünf Minuten, definiert, so können diese beiden Einzelmodule so miteinander verknüpft werden, dass ihre Abarbeitung vor dem Hintergrund der jeweiligen individuellen Anforderungen entweder nacheinander, parallel zueinander oder teilweise überlappend erfolgt.

Die Programmierung, insbesondere die Zusammenstellung von Einzelmodulen zu einem oder mehreren Gesamtmodulen kann über ein an der Fütterungsmaschine installiertes Bedienterminal oder über eine kabellos an die Fütterungsmaschine gekoppelte externe Bedieneinrichtung, beispielsweise einen Tablett-Computer oder ein Smartphone erfolgen.

Um die Programmierung anwenderfreundlich zu gestalten, kann ein spezieller Steuerbefehl vorgesehen sein, mittels dessen wenigstens zwei Einzelmodule für Antriebs- und/oder Fahrprozesse zu einem Gesamtmodul verknüpfbar sind. Dies kann nach der aus vielen Anwenderprogrammen bekannten Drag-and-Drop-Methode erfolgen, bei der die Module einfach in die Prozessabfolge gezogen und abgelegt werden. Die miteinander verknüpften Einzelmodule sind dann im zweiten Betriebsmodus parallel zueinander und/oder nacheinander reproduzierbar. Insbesondere kann der oder können die Steuerbefehle zur Verknüpfung von Einzelmodulen auf dem Display der Bedieneinrichtung in Form eines grafischen Symbols hinterlegt sein, so dass bei Betätigung des Symbols der entsprechende Verknüpfungsbefehl ausgeführt wird.

In einer bevorzugten Ausführungsform ist ein Steuerbefehl vorgesehen, mittels dessen wenigstens zwei Einzelmodule für Antriebs- und/oder Fahrprozesse zu einem Gesamtmodul verknüpft werden und die miteinander verknüpften Einzelmodule im zweiten Betriebsmodus parallel zueinander oder nacheinander reproduziert werden. Bei einer parallelen Abarbeitung kann beispielsweise vorgesehen sein, dass zum einen eine Fahrt von einem ersten Futterlager zu einem zweiten Futterlager durchgeführt wird und zum anderen während dieser Fahrt ein bestimmter Futter-Mischprozess im Vorratsbehälter der Fütterungsmaschine durchgeführt wird. Bei der Abarbeitung wenigstens zweier Module nacheinander kann vorgesehen sein, dass beispielsweise zunächst eine definierte Ortskoordinate angefahren und nach Erreichen dieser Ortskoordinate ein definierter Arbeitsprozess absolviert wird.

Weiterhin kann vorgesehen sein, dass mittels der Steuerungseinrichtung von den Sensoren ermittelte Parameter mit sicherheitsrelevanten Vorgabewerten verglichen werden und die Steuerungseinrichtung bei Über- oder Unterschreiten der Vorgabewerte einen vordefinierten Befehl, insbesondere einen "Not-Halt-Befehl" an wenigstens eine Antriebseinrichtung übermittelt. Wenn beispielsweise während eines Arbeitsprozesses, der sowohl im manuellen als auch im autonomen Modus ablaufen kann, von einem Abstands-Sensor ermittelt wird, dass die Fütterungsmaschine einen vordefinierten Sicherheitsabstand unterschreitet, so kann der angesprochene Not-Halt-Befehl" ausgelöst werden, indem beispielsweise der Fahrantrieb unterbrochen wird. Über einen solchen Fall würde der Bediener über die genannte, kabellos an die Fütterungsmaschine gekoppelte externe Bedieneinrichtung, informiert. Im zweiten Schritt kann der Bediener dann die Situation analysieren und geeignete Maßnahmen ergreifen um die Störung zu beseitigen und den unterbrochenen Fahrt- und/oder Arbeitsprozess fortsetzen.

Alternativ oder ergänzend kann auch vorgesehen sein, dass der zweite Betriebsmodus jederzeit durch einen manuellen "Not-Halt-Befehl" deaktivierbar ist. Die Bedienperson kann so nach eigenem Ermessen jederzeit in die Ausführung eines aktivierten Fahrt- und/oder Arbeitsmoduls eingreifen und den Vorgang stoppen. Dies kann beispielsweise der Fall sein, wenn die Bedienperson eine unvorhergesehene Gefahrensituation erkennt.

Um den Bedienkomfort zu erhöhen und die Aktivierung von Einzelmodulen und/oder miteinander verknüpften Modulen für Arbeits- und/oder Fahrprozesse zu erleichtern, kann vorgesehen sein, dass ein oder mehrere Module einem oder mehreren auf dem Bedienterminal vorgesehen Schaltelement zugeordnet werden können, so dass bei Aktivierung dieses Schaltelementes das entsprechende Modul gestartet und/oder gestoppt wird. Insbesondere kann auch vorgesehen sein, dass häufig wiederkehrenden Modulen leicht identifizierbare Piktogramme auf einer graphischen Bedienoberfläche zugeordnet werden, so dass die Bedienperson ohne weitere Überlegung und mit geringem Fehlerrisiko die jeweils richtige Automatik bzw. das hierfür vorgesehen Modul aktiviert.

Weiterhin kann vorgesehen sein, dass Einzelmodule und/oder miteinander verknüpfte Module für Arbeits- und/oder Fahrprozesse in Abhängigkeit von der Beendigung eines anderen Moduls zeitbasiert gestartet werden. So ist es beispielsweise möglich nach Durchführung eines mit der Fütterungsmaschine durchgeführten Entnahmevorganges und Befüllung eines an der Fütterungsmaschine vorgesehen Mischbehälters mit Futter den Mischprozess im Mischbehälter zeitbasiert zu starten. Weiterhin kann der gesamte Mischprozess und auch die Mischintensität zeitbasiert gesteuert werden. Alternativ oder ergänzend ist eine Steuerung von Arbeits- und oder Fahrprozessen auch auf Basis von durch geeignete Sensoren erfasster Daten möglich. Beispielsweise können Sensoren zur Erfassung von Futter-Inhaltsstoffen vorgesehen sein und bestimmte Arbeitsprozesse, beispielsweise das Mischen von Futter, solange erfolgen, bis das Futter eine vordefiniere Homogenität hinsichtlich der Verteilung der Inhaltsstoffe aufweist. Hierdurch wird erreicht, dass das zu mischende Futter eine vordefinierte Mischqualität erreicht und gut durchmischt wird ohne durch zu langes Mischen seine Struktur zu verlieren (Musen).

In einer weiteren bevorzugten Ausführungsform ist die erste Steuerungseinrichtung der Fütterungsmaschine drahtlos an eine zweite Steuereinrichtung einer externen Vorrichtung koppelbar. Von der ersten Steuerungseinrichtung sind somit Steuerbefehle an die zweite Steuerungseinrichtung übertragbar. Alternativ oder zusätzlich können umgekehrt von der zweiten Steuerungsvorrichtung Steuerbefehle an die erste Steuerungseinrichtung übertragbar sein. Im Ergebnis sind so an der externen Vorrichtung vorgesehene Aktoren von der ersten Steuerungseinrichtung und/oder an der Fütterungsmaschine vorgesehene Aktoren von der zweiten Steuerungseinrichtung aktivierbar. Konkret kann beispielsweise vorgesehen sein, dass an einem externen Futtervorratsbehälter, wie einem Hochsilo, eine Steuerungseinrichtung installiert ist, die mittels geeigneter Sensoren erkennt, wenn eine Fütterungsmaschine einen definierten Befüll-Platz erreicht hat. Im Anschluss daran wird ein am Hochsilo installierter Befüll-Elevator gestartet und mit diesem die Fütterungsmaschine befüllt. Analog dazu kann auch vorgesehen sein, dass die Fütterungsmaschine selbst das Erreichen eines Befüll-Platzes erkennt und die Steuerungseinrichtung der Fütterungsmaschine den Elevator des Hochsilos startet, um so den Mischbehälter mit Futter aus dem Hochsilo zu befüllen. Eine weitere Anwendung für die drahtlose Ansteuerung stellt das Öffnen und Schließen von Toreinrichtungen dar.

Weiterhin kann vorgesehen sein, dass die zur Abarbeitung vorgesehene Reihenfolge der Module für Arbeits- und/oder Fahrprozesse vor ihrer Aktivierung in Form einer Plausibilitätsprüfung mit in der Speichereinrichtung hinterlegten Reihenfolgen von Modulen verglichen wird. Hiermit kann verhindert werden, dass ein Bediener miteinander unvereinbare Module aktiviert. So kann beispielsweise ausgeschlossen werden, dass während der Abarbeitung eines Moduls "Befüllung mit Futter aus einem Hochsilo" ein Modul "Vorwärtsfahrt zu einem definierten Punkt" aktiviert wird.

Die erfindungsgemäße Aufgabe wird auch durch eine Voll- oder teilautonome Fütterungsmaschine, insbesondere einen Futtermischwagen, gelöst, die folgende Komponenten umfasst:
- wenigstens eine Antriebseinrichtung zum Antrieb von Aktoren für den Fahrantrieb und/oder die Lenkung und/oder die Entnahmevorrichtung und/oder eine Mischvorrichtung und/oder die Ausbringvorrichtung;
- wenigstens eine Steuerungseinrichtung zum Betrieb der Fütterungsmaschine und/oder der Antriebe;
- Sensoren zur Erfassung der Ortsposition der Fütterungsmaschine und/oder der Umgebung;
- Sensoren zur Erfassung von Betriebsparameter der Fütterungsmaschine;
- ein elektronisches Bedienterminal und
- wenigstens eine Speichereinrichtung für Ortskoordinaten und Arbeitsabläufe,
wobei eine Aufnahmeeinrichtung zur Abspeicherung von manuell und/oder automatisch an die Steuerungseinrichtung gegebenen Steuersignalen zum Betrieb der Antriebseinrichtungen vorgesehen ist. Eine so ausgestattete Fütterungsmaschine ist zur Durchführung eines Verfahrens gemäß eines der Ansprüche 1 bis 14 geeignet.

In einer bevorzugten Ausführungsform ist als Bedienterminal eine kabellos an die Fütterungsmaschine gekoppelte externe Bedieneinrichtung vorgesehen. Mittels des kabellosen Bedienterminals, beispielsweise eines über eine W-LAN-Verbindung an die Fütterungsmaschine gekoppelten Computers, können Bedienoperationen der Fütterungsmaschine auch von einem anderen Platz als der Fahrerkabine durchgeführt werden.

Wie weiter oben bereits beschreiben kann der erfindungsgemäße Futtermischwagen im manuellen Modus, im teilautonomen Modus (Assistenzsystem) und im vollautonomen Modus betrieben werden. Für den Betrieb im teilautonomen oder autonomen Fahrmodus kann eine spezielle Sicherheitssteuerung vorgesehen sein, die gleichzeitig mit Aktivierung des jeweiligen Fahrmodus mitaktiviert wird. In Abhängigkeit vom gewählten Modus können hierdurch speziell zur Erhöhung der Arbeitssicherheit vorgesehene Sicherheitssensoren aktiviert werden. Über die Sicherheitssteuerung sind dann auf Basis der von den vordefinierten Sicherheitssensoren übermittelten Daten bestimmte, beziehungsweise vordefinierte, Antriebe schaltbar.

Weitere, die Erfindung verbessernde Maßnahmen, werden nachstehend mit der Beschreibung von bevorzugten Ausführungsbeispielen der Erfindung anhand der Figuren näher dargestellt.

Die Figuren zeigen:
- Fig. 1: eine selbstfahrende Fütterungsmaschine am Beispiel eines selbstfahrenden Futtermischwagens;
- Fig. 2: einen landwirtschaftlichen Betrieb mit Stall, Hoffläche, Futtervorratsplätzen und einem selbstfahrenden Futtermischwagen;
- Fig. 3: den landwirtschaftlichen Betrieb gemäß Fig. 2 in einer Draufsicht;
- Fig. 4: eine Toreinfahrt zu einem Stall;
- Fig. 5: die Toreinfahrt gemäß Fig. 3 mit schematisch angedeuteten Sensorstrahlen;
- Fig. 6: die Toreinfahrt gemäß Fig. 3 in einer Draufsicht;
- Fig. 7: Beispiele von Steuerungssymbolen für Fahr- und Arbeitsprozesse;
- Fig. 8: Beispiel einer Symbolkette zur Steuerung eines Arbeits- und Fahrprozesses.

Gleiche oder ähnliche Elemente können in den nachfolgenden Figuren mit gleichen oder ähnlichen Bezugszeichen versehen sein. Ferner enthalten die Figuren der Zeichnung, deren Beschreibung sowie die Ansprüche zahlreiche Merkmale in Kombination. Einem Fachmann ist dabei klar, dass diese Merkmale auch einzeln betrachtet werden oder sie zu weiteren, hier nicht näher beschriebenen Kombinationen zusammengeführt werden können. Die Erfindung erstreckt sich ausdrücklich auch auf solche Ausführungsformen, welche nicht durch Merkmalskombinationen aus expliziten Rückbezügen der Ansprüche gegeben sind, womit die offenbarten Merkmale der Erfindung, soweit dies technisch sinnvoll ist, beliebig miteinander kombiniert sein können. Die in den Figuren dargestellten Ausführungsbeispiele haben somit nur beschreibenden Charakter und sind nicht dazu gedacht, die Erfindung in irgendeiner Form einzuschränken.

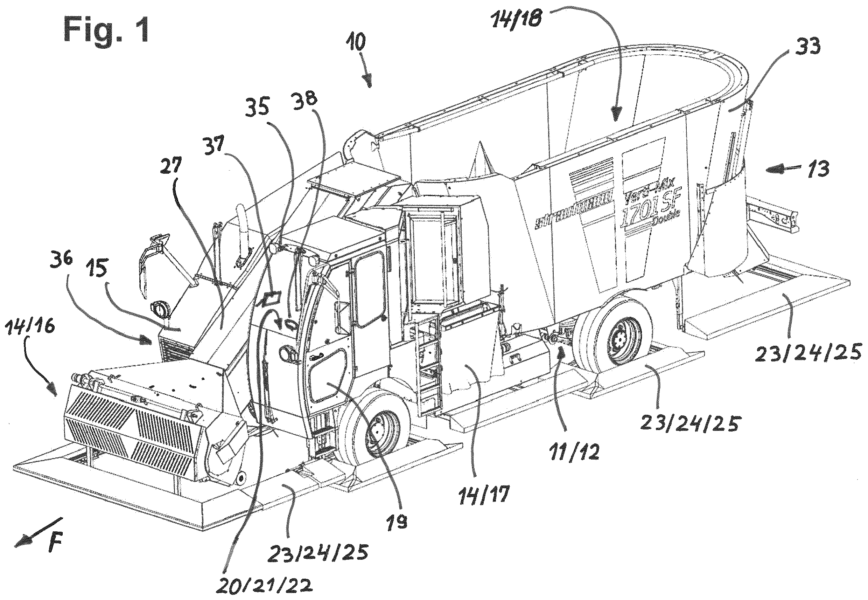

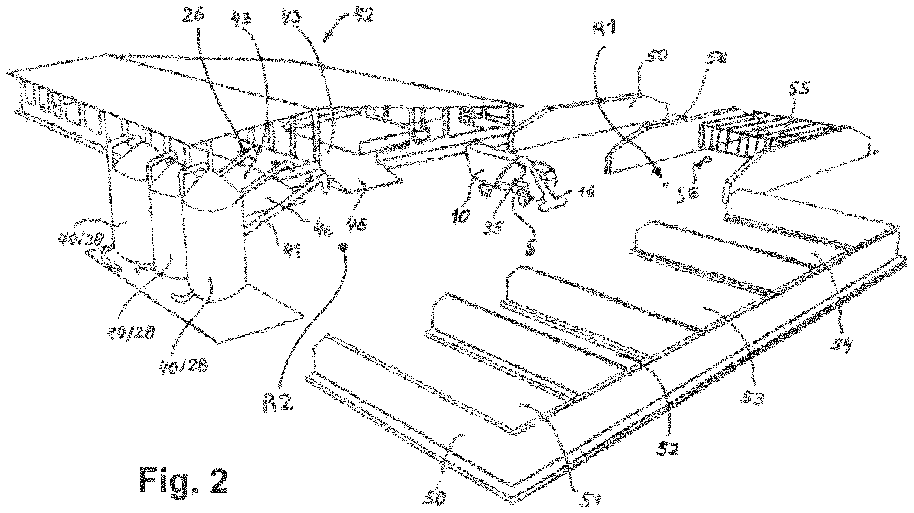

Fig. 1 zeigt eine selbstfahrende Fütterungsmaschine 10 am Beispiel eines selbstfahrenden Futtermischwagens. Der Futtermischwagen umfasst ein Fahrwerk 11 mit einem Fahrantrieb 12. Das Fahrwerk 11 trägt einen Aufbau 13, der im Wesentlichen eine Kabine 2, eine Antriebseinrichtung 15, bei der es sich um einen Verbrennungsmotor handelt, sowie mehrere Arbeitsaggregate 14 umfasst. Bei den Arbeitsaggregaten 14 handelt es sich im Wesentlichen um eine Entnahmevorrichtung 16, eine Mischvorrichtung 18 und eine Ausbringvorrichtung 17. Die Entnahmevorrichtung 16 dient zur Entnahme von Futtermitteln aus den Fahrsilos 51 bis 56 (vgl. Fig. 2).

Bei der Mischvorrichtung 18 handelt es sich um einen Mischbehälter 33, in dem zwei rotierende Vertikalschnecken eingefüllte Futtermittel vermischen. Die Befüllung des Mischbehälters 33 erfolgt, indem aus einem der Fahrsilos 51 bis 56 das zu ladende Futter zunächst von der Entnahmevorrichtung 16 gelöst und durch einen sich an die Fräse anschließenden Förderarm 27 mittels eines dort umlaufenden Förderbandes in den Mischbehälter 33 weitergefördert wird.

Der Mischbehälter 33 weist im in Fahrtrichtung F gesehen vorderen Bereich der Wandung eine mit einer Klappe verschließbare Öffnung auf, durch welche nach Abschluss des Mischvorgangs das Futter der Ausbringvorrichtung 17 zugeführt werden kann. Bei der Ausbringvorrichtung 17 handelt es sich um ein umlaufendes Querband, welches das auszubringende Futter zur in Fahrtrichtung F gesehen linken oder rechten Seite fördert. Der vorwärts fahrende Futtermischwagen legt das auszubringende Futter somit in einem zur Fütterung vorgesehen Futtergang 43 schwadförmig und seitlich neben dem Futtermischwagen ab.

Die Fütterungsmaschine 10 kann in einem ersten Modus (manueller Modus) und in einem zweiten Modus (Autonomiemodus) betrieben werden. Weiterhin möglich ist ein halbautomatischer Modus, in dem vordefinierte Arbeits- und/oder Fahrprozesse als Assistenzsystem ausführbar sind und den Fahrer von Steuerungsarbeit entlasten.

Insbesondere im Autonomiemodus, aber grundsätzlich auch im manuellen oder Assistenzmodus ist eine Sicherheitseinrichtung 25 aktivierbar. Im dargestellten Ausführungsbeispiel umfasst die Sicherheitseinrichtung 25 Sicherheitssensoren 24 in Form von Kontaktsensoren, sogenannten Bumpern. Die Sicherheitssensoren 24 schalten bei Kontakt mir Fremdkörpern Schaltelementen 23 und wirken so nach vordefinierten Kriterien auf eine Steuerungseinrichtung 20 ein. Die Steuerungseinrichtung 20 verarbeitet zum einen die von der Bedienperson oder einem Bedienprogramm gegebenen Fahr- und Steuerbefehle. Zum anderen umfasst die Steuerungseinrichtung 20 eine Speichereinrichtung 21 und eine Aufnahmeeinrichtung 22 um von der Bedienperson oder einem Bedienprogramm gegebenen Fahr- und Steuerbefehle aufzuzeichnen und bei Bedarf und nach vordefinierten Kriterien zu reproduzieren.

Figur 2 zeigt den Einsatz der Fütterungsmaschine 10 auf einem landwirtschaftlichen Betrieb. Bei dem landwirtschaftlichen Betrieb handelt es sich um einen Milchviehbetrieb mit einem Stall 42 für das Milchvieh. Zwei Rampen 46 führen zu den Futtergängen 43 auf denen die Fütterungsmaschine 10 das gemischte Futter mittels der Ausbringvorrichtung 17 schwadförmig ablegt. Weiterhin sind durch Mauern 50 begrenzte Fahrsilos 51 bis 56 und Hochsilos 40 vorgesehen. Mittels der Entnahmevorrichtung 16 kann Futter aus den Fahrsilos 51 bis 56 entnommen werden.

Die Befüllung mit Futter aus den Hochsilos 40 erfolgt indem die Fütterungsmaschine 10 unter an den Hochsilos 40 vorgesehen Elevatoren manövriert und der Laderaum 33 dann von oben befüllt wird. An den Hochsilos 40 ist zur Koordination der Befüllung jeweils eine Steuerungseinrichtung 26 vorgesehen, die im Folgenden als zweite Steuerungseinrichtung 26 bezeichnet wird. Die erste Steuerungseinrichtung 20 befindet sich somit an der Fütterungsmaschine 10 und die zweite Steuerungsvorrichtung 26 am Hochsilo 40. Die beiden Steuerungseinrichtungen 26 und 40 sind drahtlos aneinander gekoppelt, so dass von der Steuerungseinrichtung 26 der Elevator 40 gestartet werden kann, wenn die Fütterungsmaschine 10 die hierfür erforderliche Position erreicht hat Alternativ hierzu kann auch vorgesehen sein, dass die an der Fütterungsmaschine 10 installierte erste Steuerungseinrichtung 20 der Steuerungseinrichtung 26 den Befehl zum Start des Elevators und damit der Befüllung erteilt.

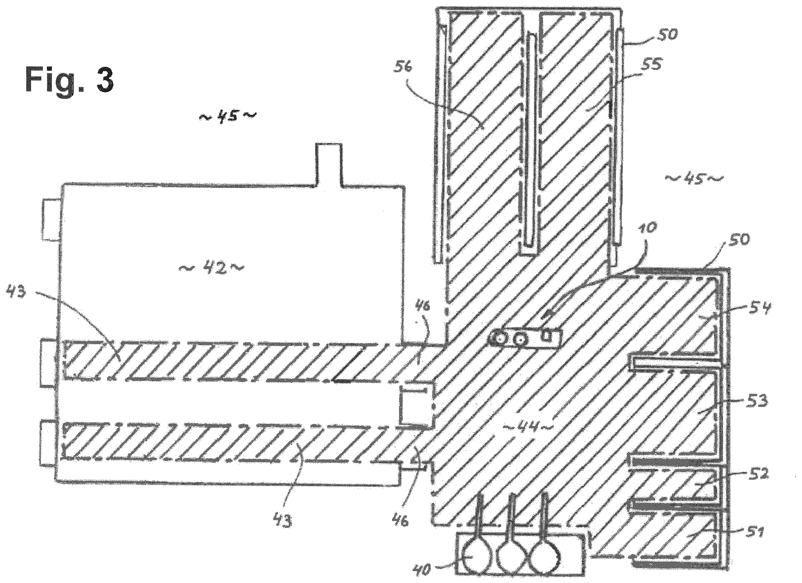

Figur 3 zeigt den landwirtschaftlichen Betrieb aus Fig. 2 in einer Draufsicht. Der gesamte Bereich unterteilt sich in einen befahrbaren Hofbereich 44, der als schraffierte Fläche dargestellt ist, und in einen nicht befahrbaren Hofbereich 44.

Ein Fütterungszyklus umfasst die Teilschritte:
- Befüllen des Mischbehälters 33 der Fütterungsmaschine auf Basis einer vorgegebenen Rezeptur,
- gegebenenfalls Mischen unterschiedlicher Futterkomponenten im Mischraum 33,
- Transport des Futters zu einer vorgesehenen Entladestelle im Futtergang 43,
- Entleeren des Mischbehälters 33.

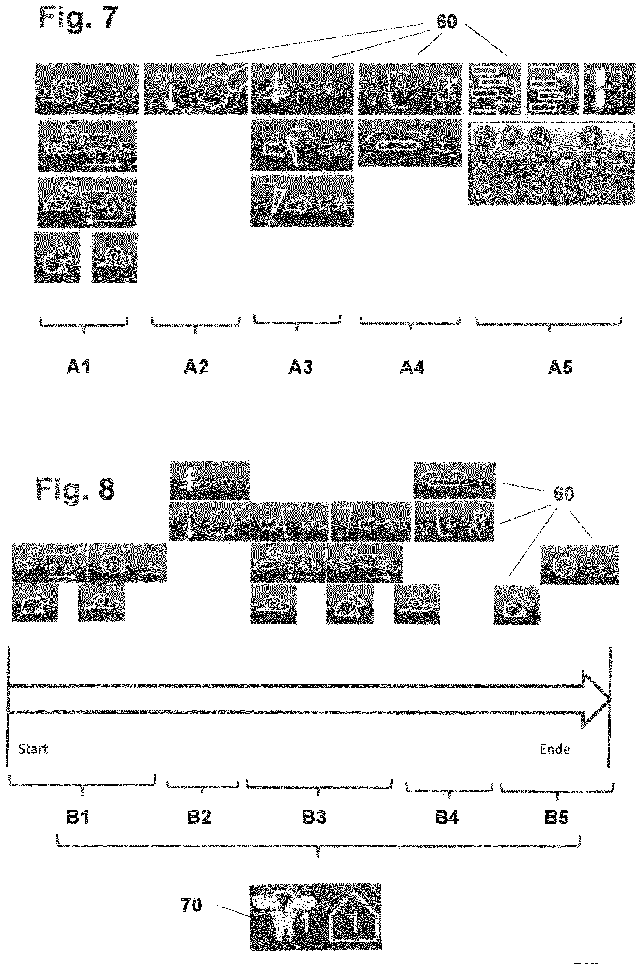

Die Ausführung dieser Teilschritte ist von den betriebsindividuellen Gegebenheiten abhängig. Um die Fütterungsmaschine 10 an die betriebsindividuellen Gegebenheiten anzupassen, führt der Bediener einzelne Teilschritte oder einen kompletten Fütterungszyklus zunächst manuell durch, zeichnet die Arbeits- und/oder Fahrprozesse mittels der Aufnahmevorrichtung 22 auf und speichert sie in Form von Modulen 60, 70 in der Speichereinrichtung 21. Dieser Vorgang kann auch als Teach-in Fahrt bezeichnet werden. Einige beispielhafte Arbeits- und/oder Fahrprozesse sind in den Figuren 7 und 8 in Form von Piktogrammen für Einzelmodule 60 dargestellt. So bezeichnet ein in Fig. 7 im Bereich A1 dargestelltes Symbol eines Hasen: "Beschleunigen/Fahren auf/mit Maximalgeschwindigkeit". Analog hierzu bezeichnet das ebenfalls im Bereich A1 dargestellte Symbol einer Schnecke "Beschleunigen/Fahren auf/mit Minimalgeschwindigkeit".

Bei einer beispielhaften Teach-in Fahrt wird von einem Startpunkt S nach Aktivierung der Aufnahmeeinrichtung 22 zunächst eine Fahrt zu einem vor einem Fahrsilo 51 befindlichen ersten Referenzpunkt R1 durchgeführt. Dabei wird die gefahrene Wegstrecke in der Speichereinrichtung 21 gespeichert. Vom ersten Referenzpunkt R1 aus wird mittels eines von der Bedienperson einzuschaltenden Assistenzsystems und eines Sensors 35 die Anschnittfläche eines Futtervorrats 39 detektiert. Bei dem Sensor 35 handelt es sich um einen 3D-Laserscanner. Auf Basis vordefinierter Kriterien und unter Nutzung der vom 3D-Sensor 35 ermittelten Daten wird ein anzusteuernder Startpunkt SE für die Futterentnahme festgelegt. In einem weiteren Teilschritt fährt die Fütterungsmaschine 10, gesteuert vom Assistenzsystem, den Entnahmestartpunkt an. Die für die Navigation erforderlichen Positionsdaten werden zum einen mittels eines globalen Satellitennavigationssystem (GNSS) ermittelt und zum anderen durch die Odometriesensoren. Auf die Daten beider Systeme wird je nach Bedarf einzeln oder gemeinsam, das heißt: unter paralleler Nutzung von mit unterschiedlichen Systemen ermittelten Daten, zugegriffen.

Nach Ankunft am Entnahmestartpunkt SE wird die Entnahmevorrichtung 16 in Startposition gebracht. Die Entnahmevorrichtung 16 löst Futter aus dem Vorratshaufen und fördert es in den Mischbehälter 33. Die zu entnehmende Futtermenge wird auf Basis von in der Steuerungseinrichtung 20 gespeicherten Parametern, wie der jeweils zu fütternden Tiergruppe und der für die Tiergruppe vorgesehenen Futterrezeptur, mittels eines weiteren Assistenzsystems ermittelt.

Das in den Futtermischwagen geförderte Futter wird dort mittels eines bekannten, nicht näher dargestellten, Wiegesystems gewogen. Der Befüllprozess wird beendet, wenn die gewünschte Futtermenge sich im Mischbehälter 33 befindet. Anschließend wird die Fütterungsmaschine 10 mittels gesteuert vom Assistenzsystem (Satelliten- und/oder Odometrie-Ortung) zum ersten Referenzpunkt R1 zurückmanövriert. Da die Fahrten vom ersten Referenzpunkt R1 zum Entnahmestartpunkt SE (unmittelbar vor der Anschnittfläche) und zurück davon abhängig sind, wo der Entnahmestartpunkt SE sich vor der aktuell vorhandenen Anschnittfläche befindet, eignen sich diese Fahrtstrecken nicht gut zum Aufzeichnen und reproduzieren. Andererseits sind diese Fahrten von einem Referenzpunkt R1 zu einem Entnahmestartpunkt SE auch auf unterschiedlichen Betrieben häufig gleich oder zumindest einander so ähnlich, dass herstellseitig vordefinierte Assistenzmodule einetzbar sind.

Im Gegensatz dazu sind die Fahrten von einem Referenzpunkt R1 zu einem weiteren Referenzpunkt R2 unterhalb eines Hochsilo-Elevators oder einem anderen Referenzpunkt, beispielsweise vor einer Stalleinfahrt betriebsindividuell sehr unterschiedlich. Unabhängig davon sind die von Betrieb zu Betrieb unterschiedlichen Fahrwege auf einem einzigen Betrieb immer wieder die gleichen. Mit anderen Worten: Zwischen zwei Referenzpunkten R1 und R2 muss eine Fütterungsmaschine 10 auf einem Betrieb immer wieder dieselbe Strecke zurücklegen. Solche Fahrprozesse eignen sich deshalb besonders gut zur Aufzeichnung als Einzelmodule 60 beziehungsweise Gesamtmodule 70 im Rahmen einer Teach-in Fahrt und zur Reproduktion bei Bedarf.

Ein großer Vorteil einer solchen Weg-Reproduktion auf Basis einer aufgezeichneten Fahrt liegt darin, dass eine autonome Fahrt nicht, oder zumindest nicht nur, auf Basis von kontinuierlich zu erfassenden Raumumgebungsdaten erfolgen muss. Die gewünschte Fahrtroute kann vielmehr vom Bediener auf sehr einfache Weise vordefiniert, beziehungsweise geteacht werden.

Nachdem die Fütterungsmaschine 10 vom Entnahmestartpunkt SE (unmittelbar vor der Anschnittfläche) zum ersten Referenzpunkt R1 zurückmanövriert worden ist, kann die Bedienperson wieder die Aufnahmeeinrichtung 22 aktivieren und eine weitere teaching-Fahrt zu einer weiteren Zielposition, beispielsweise zu einer unterhalb eines Elevators 41 gelegenen Position, durchführen und diese Zielposition als Referenzpunkt R2 definieren. Auch diese zweite zwischen den Referenzpunkten R1 und R2 zurückgelegte Route wird dabei exakt mit allen zugehörigen Steuerbefehlen aufgezeichnet und bildet ein weiteres Fahrtstrecken-Modul.

Analog zu der beschriebenen Vorgehensweise können beliebig viele und im Prinzip beliebig komplexe Einzel- beziehungsweise Gesamtmodule 60, 70 erstellt und in der Speichereinrichtung abgelegt werden. Diesen Modulen 60, 70 können vordefinierte Piktogramm-Symbole zugeordnet werden (vgl. Fig. 7 und 8).

Die so eingespeicherten Module 60, 70 sind miteinander verknüpfbar. Die generierten, miteinander verknüpften Module 60, 70 lassen sich jeweils wieder mit anderen Einzelmodulen 60 oder mit ebenfalls miteinander verknüpften Gesamtmodulen 70 kombinieren. Dabei kann eine Konsistenzprüfung vorgesehen sein, um die Ausführung nicht miteinander harmonierende Fahr- und/oder Prozesse zu verhindern.

Besonders vorteilhaft für die Bedienperson ist, dass der zu teachende Prozess seiner direkten Kontrolle unterliegt und er deshalb unmittelbar versteht, was er selbst erledigt und somit als ein Modul 60, 70 in der Speichereinrichtung 21 gespeichert hat. Eine teach-in Fahrt ist letztlich weitgehend identisch mit einer manuellen Fahrt und es ist deshalb kein hohes technisches Verständnis des autonomen Systems erforderlich. Die Bedienperson kann zudem selbstständig die Prozesswege und die Prozessreihenfolge ändern, wozu ebenfalls keine tieferen Programmierkenntnisse erforderlich sind. Das System ist somit insgesamt sehr flexibel und leicht an individuelle Gegebenheiten, insbesondere an unterschiedliche landwirtschaftliche Betriebe, anpassbar.

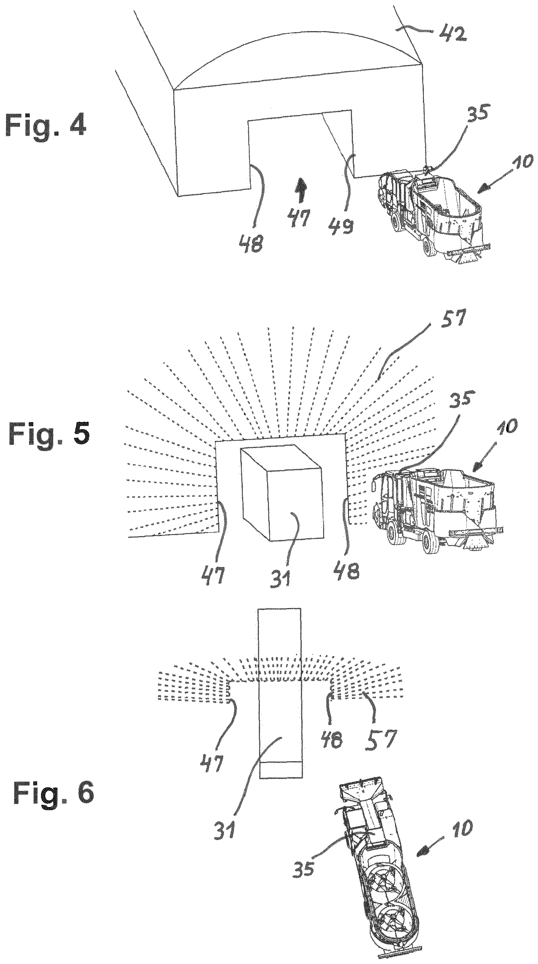

In den Figuren 4 bis 6 ist die Funktion eines Moduls zur Anfahrt an ein Tor 47 dargestellt. Das Tor 47 ist seitlich durch Torbegrenzungen 48 und 49 eingefasst. Gerade bei Toren/Eingängen ist eine genaue Navigation für das mittige Anfahren in einen Futtergang 43 nötig. Durch die Gebäudenähe kann eine Abschattung des GNSS-Systems bedingt und dadurch eine ungenauere Lokalisierung möglich sein. Durch Daten des 3D-Sensors 35 wird die Toreinfahrt 47 genau detektiert. In den Figuren 5 und 6 ist dieser Detektionsvorgang in Form von vom Sensor 35 ausgesandten Strahlen 57 schematisch verdeutlicht. Die aktuelle Position der Fütterungsmaschine 10 wird mit einem virtuellen Raum 31 verglichen. Zielvorgabe für das Ansteuern der Tordurchfahrt ist somit die Navigation der Fütterungsmaschine 10 in den virtuellen Raum 31.

Die Lokalisierung sowie Navigation des Fahrzeugs erfolgen auf Basis der vom Sensor 35 ermittelten Daten. Mit Hilfe der 3D-Daten wird dabei geprüft, ob das Tor offen ist. Anschließend wird die Anfahrtsposition der Fütterungsmaschine 10 in Form des virtuellen Raums 31 im Tor 47 detektiert. Diese Anfahrposition kann mittig oder auch seitlich verschoben (vorgegebener Offset) sein. Anschließend wird überprüft, ob diese Position auch durch die Maschine angefahren werden kann. Somit erfolgt gleichzeitig eine Hinderniserkennung. Hat die Fütterungsmaschine 10 den virtuellen Raum 31 erreicht kann die für die Fahrt im Stall vorgesehene Navigation greifen.

Fig. 7 zeigt Beispiele von Piktogramm-Symbolen 60 verschiedener Einzelmodule. Selbstverständlich können über die dargestellten Einzelmodule und deren Piktogramme auch weitere, beziehungsweise andere, Einzelmodule und hierfür geeignete Piktogramme vorgesehen sein. Bei diesen Einzelmodulen handelt es sich um für den Betrieb der Fütterungsmaschine relevante Arbeits- und Fahrprozesse. Den dargestellten Symbolen sind folgende Prozesse zugeordnet:

| | | |
|---|---|---|
| A1 | Funktionsbereich "Fahren": | Stillstand bzw. Parken, Vorwärtsfahrt, Rückwärtsfahrt, Beschleunigen/Fahren auf/mit Maximalgeschwindigkeit (Hase), Beschleunigen/Fahren auf/mit Minimalgeschwindigkeit (Schnecke); |
| A2 | Funktionsbereich "Aufnahme": | Startsymbol zur Aktivierung des für die Futterentnahme vorgesehen Arbeitswerkzeuges und/oder des Gesamtmoduls für die Futteraufnahme; |
| A3 | Funktionsbereich "Mischen": | Aktivierung der Mischschnecke, Zu- bzw. Abschalten von Gegenschneiden zur besseren Zerkleinerung von strohigem Material. |
| A4 | Funktionsbereich "Austragen": | Positionseinstellung einer für den Futteraustrag vorgesehenen Ausbringöffnung am Mischbehälter, Aktivierung eines für den Futteraustrag vorgesehenen Bandförderers; |
| A5 | Allgemeine Steuerbefehle: | Verschieben von Einzelmodulen innerhalb eines Gesamtmoduls, Definition von Dreh- und Antriebsrichtung, Geschwindigkeitssteuerung. |

Fig. 8 zeigt ein Beispiel einer aus Einzelmodulen zusammengesetzten Symbolkette. Diese Symbolkette bildet ein aus den Teilbereichen B1 "Fahrt zum Silo", B2 "Futteraufnahme", B3 "Mischen und Fahrt zum Stall", B4 "Futteraustrag" und B5 "Ende Futteraustrag und Fahrt zur Startposition" zusammengesetztes Gesamtmodul 70, für das wiederum ein spezielles Piktogramm vorgesehen ist. Das im Ausführungsbeispiel dargestellte Gesamtmodul 70 bildet somit einen ganz bestimmten Arbeitsprozess, nämlich die Entnahme von Futter aus einem vorbestimmten Futterlager (Silo) und die Futtervorlage in einem vorbestimmten Stall ab. Wird die Fütterungsmaschine an unterschiedlichen Futterlagern und/oder unterschiedlichen Ställen eingesetzt, können weitere Gesamtmodule 70 auf die beschriebene Art und Weise erstellt werden. Darüber hinaus können in einem weiteren Schritt auch die Gesamtmodle 70 selbst zu einem nochmals übergeordneten, in den Figuren nicht dargestellten, Gesamtmodul zusammengefasst werden. Hiermit kann beispielsweise festgelegt werden, dass zunächst ein für eine erste zu fütternde Tiergruppe vorgesehenes Gesamtmodul abgearbeitet wird, dann das Gesamtmodul für eine nächste zu fütternde Tiergruppe, und so weiter.

Der Teilbereich B1 "Fahrt zum Silo" ist zusammengesetzt aus den Einzelmodulen "Vorwärtsfahrt mit Maximalgeschwindigkeit", "Verzögerung auf Minimalgeschwindigkeit" und "Stillstand". Darüber hinaus ist vorgesehen, z.B. einzelne Silagen (Gras, Mais, etc.) sowie Hochsilos (Kraftfutter o.ä.) als weitere Piktogramm-Symbole abzubilden. Dies ist erforderlich, da eine Mischration aus mehreren Komponenten besteht und diese eindeutig zugewiesen werden müssen.

Anschließend wird der Teilbereich B2 "Futteraufnahme" initiiert. Neben der Mischvorrichtung wird der Prozess Futteraufnahme gestartet. Hier erfolgt zwangsläufig die Vorgabe eines Zielgewichtes der jeweils aufgenommenen Komponente nach ausgewähltem Rezept. Sind die verschiedenen Komponenten aufgenommen, wird im Teilbereich B3 der Mischvorgang unter Zuhilfenahme der Gegenschneiden fortgesetzt und die Fahrt zum Stall mit Rückwärtsfahrt in Minimalgeschwindigkeit gestartet. Anschließend werden die Gegenschneiden ausgeschwenkt und die Vorwärtsfahrt wird zunächst mit Maximalgeschwindigkeit, dann mit Minimalgeschwindigkeit fortgesetzt. Der Futteraustrag B4 erfolgt weiterhin mit Minimalgeschwindigkeit, der Bandförderer wird entsprechend der Auswurfrichtung gestartet und die für den Futteraustrag vorgesehene Ausbringöffnung am Mischbehälter wird entsprechend der Vorgabe in Position gebracht.

Am Ende des Futteraustrags erfolgt die Fahrt zur Startposition B5 mit Maximalgeschwindigkeit. Bei Zielerreichung wird die Maschine in den Zustand Stillstand bzw. Parken verbracht.

Das Einlernen ("Teachen") der Maschine erfolgt in Modulen. Das heißt: der Bediener lernt (teacht) das Fahrzeug in kleinen Einheiten an, indem er die zu erledigende Aufgabe einmal manuell selbst erledigt und den Vorgang durch Aktivieren und Deaktivieren der Aufnahmeeinrichtung dokumentiert und abspeichert. Dieser jeweiligen Einheit wird ein Symbol und/oder eine Symbolkette eindeutig zugewiesen. Weiterhin können einer Verknüpfung von Modulen, die durch den Bediener erstellt wurden, auch weitere Module mit Informationen, wie z.B. ein Fütterungsmanagement und/oder ein Rezept und/oder eine Komponente unter Angabe des erforderlichen Gewichtes und/oder der erforderlichen Futtermenge einer Tiergruppe, ergänzend hinzugefügt werden.

### Bezugszeichenliste:

- 10: Fütterungsmaschine
- 11: Fahrwerk
- 12: Fahrantrieb
- 13: Aufbau
- 14: Arbeitsaggregat
- 15: Antriebseinrichtung
- 16: Entnahmevorrichtung
- 17: Ausbringvorrichtung
- 18: Mischvorrichtung
- 19: Kabine
- 20: Steuerungseinrichtung
- 21: Speichereinrichtung
- 22: Aufnahmeeinrichtung
- 23: Schaltelement
- 24: Sicherheitssensor (Bumper)
- 25: Sicherheitseinrichtung
- 26: zweite Steuerungseinrichtung
- 27: Förderarm
- 28: externe Vorrichtung
- 29: -
- 30: -
- 31: Raum
- 32: -
- 33: Mischbehälter
- 34: -
- 35: Sensor (Ortsposition, Laserscanner)
- 36: Sensor (Betriebsparameter)
- 37: Bedienterminal
- 38: Lenkung
- 39: Futtervorrat
- 40: Hochsilo
- 41: Elevator
- 42: Stall
- 43: Futtergang
- 44: Hofbereich (befahrbar)
- 45: Hofbereich (nicht befahrbar)
- 46: Rampe
- 47: Tor
- 48: Torbegrenzung
- 49: Torbegrenzung
- 50: Mauer
- 51: Fahrsilo 1
- 52: Fahrsilo 2
- 53: Fahrsilo 3
- 54: Fahrsilo 4
- 55: Fahrsilo 5
- 56: Fahrsilo 6
- 57: Strahlen
- 60: Piktogramm-Symbol (Einzelmodule)
- 70: Piktogramm-Symbol für ein Gesamtmodul

- A1: Piktogramm-Symbole "Fahren"
- A2: Piktogramm-Symbole "Aufnahme"
- A3: Piktogramm-Symbole "Mischen"
- A4: Piktogramm-Symbole "Austragen"
- A5: Piktogramm-Symbole "Allgemeine Steuerbefehle"
- B1: Teilbereich "Silo"
- B2: Teilbereich "Futteraufnahme"
- B3: Teilbereich "Fahrt zum Stall"
- B4: Teilbereich "Futteraustrag"
- B5: Teilbereich "Ende Futteraustrag"
- S: Startpunkt
- SE: Startpunkt Entnahme
- F: Fahrtrichtung
- R1: erster Referenzpunkt
- R2: zweiter Referenzpunkt

## Patentansprüche

1. Verfahren zur Steuerung einer Fütterungsmaschine (10), insbesondere eines selbstfahrenden Futtermischwagens, wobei die Fütterungsmaschine (10) umfasst:
- wenigstens eine Antriebseinrichtung (15) zum Antrieb von Aktoren (30) für den Fahrantrieb (12) und/oder die Lenkung (38) und/oder eine Entnahmevorrichtung (16) und/oder eine Mischvorrichtung (18) und/oder eine Ausbringvorrichtung (17),
- wenigstens eine Steuerungseinrichtung (20) zum Betrieb der Fütterungsmaschine (10) und/oder der Antriebseinrichtungen (15),
- Sensoren (35) zur Erfassung der Ortsposition der Fütterungsmaschine (10) und/oder der Umgebung,
- Sensoren (36) zur Erfassung von Betriebsparameter der Fütterungsmaschine (10),
- ein elektronisches Bedienterminal (37),
- wenigstens eine Speichereinrichtung (21) für Ortskoordinaten und Arbeitsabläufe,
**dadurch gekennzeichnet, dass** zum Betreiben der Fütterungsmaschine (10) wenigstens zwei Betriebsmodi vorgesehen sind und in einem ersten Betriebsmodus
- eine Aufnahmeeinrichtung (22) zur Aufzeichnung von manuell und/oder automatisch an die Steuerungseinrichtung (20) gegebenen Steuersignalen zum Betrieb der Antriebseinrichtungen (15) aktiviert wird,
- nach Aktivierung der Aufnahmeeinrichtung (22) die aktuellen Orts- und/oder Betriebsparameter der Fütterungsmaschine (10) als Startpunkt (S) definiert und in der Speichereinrichtung (21) abgelegt werden,
- nach Definition des Startpunkts (S) ein Arbeits- und/oder Fahrprozess manuell von einer Bedienperson durchgeführt wird und die manuell und/oder automatisch an die Steuerungseinrichtung (20) gegebene Steuersignale aufgezeichnet und in der Speichereinrichtung (21) abgespeichert werden,
- die Aufnahmeeinrichtung (22) deaktiviert wird
und in einem zweiten Betriebsmodus nach dessen Aktivierung der in der Speichereinrichtung (20) abgelegte Arbeits- und/oder Fahrprozess aktiviert und von der Fütterungsmaschine (10) automatisch durchführbar ist.

2. Verfahren zur Steuerung einer Fütterungsmaschine (10) nach Anspruch 1, **dadurch gekennzeichnet, dass** im ersten Betriebsmodus wenigstens zwei unterschiedliche Arbeits- und/oder Fahrprozesse aufgezeichnet und in Form von Einzelmodulen (60) in der Speichereinrichtung (21) abgelegt werden.

3. Verfahren zur Steuerung einer Fütterungsmaschine (10) nach Anspruch 1, oder 2, **dadurch gekennzeichnet, dass** im ersten Betriebsmodus prozessrelevante Informationen statisch eingegeben oder als Schnittstelle zu parallelen oder übergeordneten Systemen und/oder Programmen in Form von Einzelmodulen (60) in der Speichereinrichtung (21) abgelegt werden.

4. Verfahren zur Steuerung einer Fütterungsmaschine (10) nach einem der Ansprüche 2 oder 3, **dadurch gekennzeichnet, dass** zwei oder mehr Einzelmodule (60) miteinander zu einem Gesamtmodul (70) verknüpfbar sind, wobei die Einzelmodule (60) ein Gesamtmodul (70) bilden, welches im zweiten Betriebsmodus die miteinander verknüpften Einzelmodule (60) je nach Verknüpfungsart parallel zueinander und/oder sequentiell reproduziert.

5. Verfahren zur Steuerung einer Fütterungsmaschine (10) nach Anspruch 4 **dadurch gekennzeichnet, dass** Gesamtmodule (70) mit zwei oder mehr Einzelmodulen (60) und/oder zwei oder mehr Gesamtmodulen (70) verknüpfbar sind, wobei die Einzel- und Gesamtmodule (60, 70) eine Prozesskette bilden, welche im zweiten Betriebsmodus die miteinander verknüpften Module (60, 70) je nach Verknüpfungsart parallel zueinander und/oder sequentiell reproduziert.

6. Verfahren zur Steuerung einer Fütterungsmaschine (10) nach Anspruch 1 bis 5, **dadurch gekennzeichnet, dass** in der Speichereinrichtung (20) vordefinierte Module (60, 70) für Arbeits- und/oder Fahrprozesse abgelegt und im ersten Betriebsmodus manuell abrufbar sind, so dass der abgerufene Arbeits- und/oder Fahrprozess als Fahrerassistenzsystem ausführbar ist.

7. Verfahren zur Steuerung einer Fütterungsmaschine (10) nach einem der Ansprüche 1 bis 6, **dadurch gekennzeichnet, dass** die Programmierung über ein Bedienterminal (37) oder über eine kabellos an die Fütterungsmaschine (10) gekoppelte externe Bedieneinrichtung, beispielsweise einen Tablett-Computer oder ein Smartphone erfolgt.

8. Verfahren zur Steuerung einer Fütterungsmaschine (10) nach einem der Ansprüche 1 bis 7, **dadurch gekennzeichnet, dass** ein spezieller Steuerbefehl vorgesehen ist, mittels dessen wenigstens zwei Module (60, 70) für Antriebs- und/oder Fahrprozesse zu einem übergeordneten Gesamtmodul verknüpft werden und die miteinander verknüpften Module (60, 70) im zweiten Betriebsmodus parallel zueinander und/oder nacheinander reproduziert werden.

9. Verfahren zur Steuerung einer Fütterungsmaschine (10) nach einem der Ansprüche 1 bis 8, **dadurch gekennzeichnet, dass** von der Steuerungseinrichtung (20) von den Sensoren (35, 36) ermittelte Parameter mit sicherheitsrelevanten Vorgabewerten verglichen werden und die Steuerungseinrichtung (20) bei Über- oder Unterschreiten der Vorgabewerte einen vordefinierten Befehl, insbesondere einen "Not-Halt-Befehl" an wenigstens eine Antriebseinrichtung (15) übermittelt.

10. Verfahren zur Steuerung einer Fütterungsmaschine (10) nach einem der Ansprüche 1 bis 9, **dadurch gekennzeichnet, dass** der zweite Betriebsmodus jederzeit durch einen manuellen "Not-Halt-Befehl" deaktivierbar ist.

11. Verfahren zur Steuerung einer Fütterungsmaschine (10) nach einem der Ansprüche 1 bis 10, **dadurch gekennzeichnet, dass** Einzelmodule (60) und/oder miteinander verknüpfte Gesamtmodule (70) für Arbeits- und oder Fahrprozesse einem auf dem Bedienterminal vorgesehen Schaltelement (23) zugeordnet werden können, so dass bei Aktivierung dieses Schaltelementes (23) das entsprechende Modul (60, 70) gestartet und/oder gestoppt wird.

12. Verfahren zur Steuerung einer Fütterungsmaschine (10) nach einem der Ansprüche 1 bis 11, **dadurch gekennzeichnet, dass** Einzelmodule (60) und/oder miteinander verknüpfte Gesamtmodule (70) für Arbeits- und oder Fahrprozesse zu einem vordefinierten Zeitpunkt und/oder in Abhängigkeit von der Beendigung eines anderen Moduls (60, 70) zeit- oder ereignisbasiert gestartet werden.

13. Verfahren zur Steuerung einer Fütterungsmaschine (10) nach einem der Ansprüche 1 bis 12, **dadurch gekennzeichnet, dass** die erste Steuerungseinrichtung (20) der Fütterungsmaschine (10) drahtlos an eine zweite Steuereinrichtung (26) einer externen Vorrichtung (28) koppelbar ist und von der ersten Steuerungseinrichtung (20) Steuerbefehle an die zweite Steuerungseinrichtung (26) übertragbar sind und/oder umgekehrt von der zweiten Steuerungsvorrichtung (26) Steuerbefehle an die erste Steuerungseinrichtung (20), so dass an der externen Vorrichtung (28) vorgesehene Aktoren von der ersten Steuerungseinrichtung (20) und/oder an der Fütterungsmaschine (10) vorgesehen Aktoren von der zweiten Steuerungseinrichtung (26) aktivierbar sind.

14. Verfahren zur Steuerung einer Fütterungsmaschine (10) nach einem der Ansprüche 1 bis 13, **dadurch gekennzeichnet, dass** die zur Abarbeitung vorgesehene Reihenfolge der Module (60, 70) für Arbeits- und/oder Fahrprozesse vor ihrer Aktivierung in Form einer Plausibilitätsprüfung mit in der Speichereinrichtung (21) hinterlegten Reihenfolgen von Modulen (60, 70) verglichen wird.

15. Voll- oder teilautonome Fütterungsmaschine, insbesondere Futtermischwagen (10), umfassend
- wenigstens eine Antriebseinrichtung (15) zum Antrieb von Aktoren (30) für den Fahrantrieb (12) und/oder die Lenkung (38) und/oder die Entnahmevorrichtung (16) und/oder eine Mischvorrichtung (18) und/oder die Ausbringvorrichtung (17) ;
- wenigstens eine Steuerungseinrichtung (20) zum Betrieb der Fütterungsmaschine (10) und/oder der Antriebe (15);
- Sensoren (35) zur Erfassung der Ortsposition der Fütterungsmaschine (10) und/oder der Umgebung;
- Sensoren (36) zur Erfassung von Betriebsparameter der Fütterungsmaschine (10);
- ein elektronisches Bedienterminal (37) und
- wenigstens eine Speichereinrichtung (21) für Ortskoordinaten und Arbeitsabläufe,
**dadurch gekennzeichnet, dass** eine Aufnahmeeinrichtung (22) zur Abspeicherung von manuell und/oder automatisch an die Steuerungseinrichtung (20) gegebenen Steuersignale zum Betrieb der Antriebseinrichtungen vorgesehen, so dass die Fütterungsmaschine (10) zur Durchführung eines Verfahrens gemäß eines der Ansprüche 1 bis 14 geeignet ist.
